# EUROPEAN PATENT SPECIFICATION

(11) **EP 3 119 701 B1**
(45) Date of publication and mention of the grant of the patent: **06.05.2020**
(21) Application number: 15711881.1
(22) Date of filing: 16.03.2015
(51) Int. Cl.: B65D 85/804

(54) **CAPSULE FOR THE PREPARATION OF A LIQUID FOOD PRODUCT VIA A BREWING MACHINE**
KAPSEL ZUR VORBEREITUNG VON FLÜSSIGER NAHRUNG MITTELS EINEM BRAUENAPPARATUS
CAPSULE POUR LA PREPARATION D'UN PRODUIT ALIMENTAIRE LIQUIDE PAR L'INTERMEDIAIRE D'UNE MACHINE D'INFUSION

(30) Priority: 19.03.2014 IT TO20140228
(43) Date of publication of application: 25.01.2017
(73) Proprietor: Luigi Lavazza S.p.A., 10152 Torino (IT)
(72) Inventor: CABILLI, Alberto, I-10024 Moncalieri (Torino) (IT); BUGNANO, Luca, I-10024 Moncalieri (Torino) (IT); AUDINO, Massimo, I-10124 Torino (IT)
(74) Representative: Gallarotti, Franco
(86) International application number: PCT/IB2015/051908
(87) International publication number: WO 2015/140691

(56) References cited:
- WO-A1-2009/008723
- WO-A1-2012/062842
- WO-A1-2014/128647
- WO-A2-2009/081250
- FR-A1- 2 973 209
- US-A- 5 613 617

## Description

### Technical field

The present invention relates to capsules for the preparation of liquid food products with brewing machines. The invention has been developed with particular reference to capsules for the preparation of coffee.

### Prior art

A capsule according to the preamble of Claim 1 is known from EP 2 662 313 A1, which describes a capsule containing a precursor of a beverage, in particular ground coffee, closed at at least one end by a foil. The document in question is aimed at enabling an efficient disposal of the various parts that make up the capsule, after its use. For the above purpose the body of the capsule has an annular flange secured on which is a closing foil that can be peeled off, which has an ovoidal shape. A part of the ovoidal foil that projects laterally from the annular flange constitutes a grippable portion, substantially in the form of a tab, that makes it possible to exert a manual pull on the foil as a whole. In this way, after the capsule has been used, the foil can be removed, and the parts of the capsule - i.e., the capsule body, the spent precursor, and the foil - can be disposed of in a differentiated way. A solution of this type is also known from WO 2011/080022 A1, where the outer rim of two foils that close the capsule body at its two opposite ends is shaped so as to define a projecting and easily grippable tab.

In the solutions cited, the grippable portion of the foil projects laterally with respect to an annular flange of the capsule body, on which the foil itself is secured. This may cause incorrect positioning of the capsule within the brewing machine and occasionally leakage of liquid. Such a problem may exist for example in machines the brewing chamber of which is made up of two parts that are movable with respect to one another, typically a capsule holder and an injector device, that are to couple together in a fluid-tight way. In machines of this type it is possible for the projecting portion of the foil to undergo deformation during insertion of the capsule into machine and/or during displacement of one part of the brewing chamber towards the other part. The consequence of this is that the grippable portion of the foil may partially undergo creasing or fold back on itself in an area of the facing surfaces of the two parts of the brewing chamber, thereby causing interruption of the fluid-tight seal between the aforesaid surfaces and possible loss of pressure and leakage of the fluid injected.

Known from FR 2973209 A1 is a further capsule having a closing foil that can be peeled off after use of the capsule in order to enable an efficient disposal of its component parts. Also in this solution the foil has a rim shaped so as to define a projecting portion, in the form of a tab, which undergoes deformation during the production step so that it can mate with one between the main part of the foil and the capsule body. In particular, in a solution described in the document in question, the grippable portion is folded back on the foil, whereas, in another solution described, the grippable portion is set up against the circumferential wall of the capsule. In either case, the grippable portion does not project substantially with respect to the flange of the capsule body, thus reducing the risks exemplified above in relation to EP 2 662 313 A1 and WO 2011/080022 A1, albeit not eliminating them altogether. The solutions described in FR 2973209 A1 in any case entail the need to carry out an additional operation - folding of the grippable peel-off portion - as compared to those normally envisaged to obtain a capsule of a more traditional type.

WO 2014/128647 describes a capsule for the preparation of beverages in brewing machines, which has a capsule body comprising a circumferential wall with an annular flange at an end thereof, a top face at the end of the circumferential wall having the flange, and a bottom opposite to the top face. The top face comprises a foil which is secured relative to the flange and the flange has, in its outer profile, at least one indentation to enable to grip a corresponding portion of the foil, to remove the latter. In WO 2014/128647, which falls under the provision of Article 54(3) EPC, the precursor of the beverage is not contained directly in the cavity of the capsule body, but is contained in an indirect way, being it enclosed in a sachet filter which is fixed to the flange of the capsule body and to the removable foil.

### Aim and summary of the invention

In view of what has been set forth above, the aim of the present invention is to provide a capsule equipped with a peel-off foil that is simpler to produce, less expensive, and more reliable as compared to the prior art referred to above. In the above general framework, a particular object of the invention is to provide one such capsule the process of production of which does not entail further operations as compared to those usually envisaged for obtaining capsules of the known type prior to disclosure of FR 2973209 A1.

According to the invention, at least one of the above objects is achieved thanks to a capsule for the preparation of a liquid food product via a brewing machine having the characteristics of Claim 1. The invention moreover regards a system and a method for the preparation liquid products that use the capsule of Claim 1. Advantageous developments of the invention form the subject of the dependent claims. The claims form an integral part of the technical teaching provided herein in relation to the invention.

### Brief description of the drawings

The invention will now be described, purely by way of non-limiting example, with reference to the annexed drawings, wherein:
- Figures 1, 2, and 3 are schematic illustrations, in perspective view, in cross-sectional view, and in top plan view, respectively, of the general structure of a capsule according to the invention;
- Figures 4 and 5 are a partial and schematic perspective view and a schematic view from beneath, respectively, of a capsule according to a first embodiment of the invention;
- Figures 6 and 7 are views similar to those of Figures 4 and 5, regarding a capsule according to a second embodiment of the invention;
- Figures 8 and 9 are views similar to those of Figures 4 and 5, regarding a capsule according to a third embodiment of the invention;
- Figures 10 and 11 are a partial and schematic perspective view and a schematic top plan view, respectively, of a capsule according to a fourth embodiment of the invention;
- Figures 12, 13, and 14 are schematic cross-sectional views of a delivery assembly of a machine for preparing liquid products, in three different operating conditions, these figures being aimed at exemplifying use of a capsule according to the invention;
- Figure 15 is a schematic cross-sectional view of the general structure of a capsule according to a variant embodiment of the invention; and
- Figure 16 is a schematic top plan view of a foil for closing the capsule of Figure 15, prior to its application on the capsule itself.

### Description of embodiments of the invention

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in various points of the present description do not necessarily refer to one and the same embodiment. Furthermore, particular conformations, structures, or characteristics may be combined in any adequate way in one or more embodiments. The references used herein are provided merely for convenience and hence do not define the sphere of protection or the scope of the embodiments.

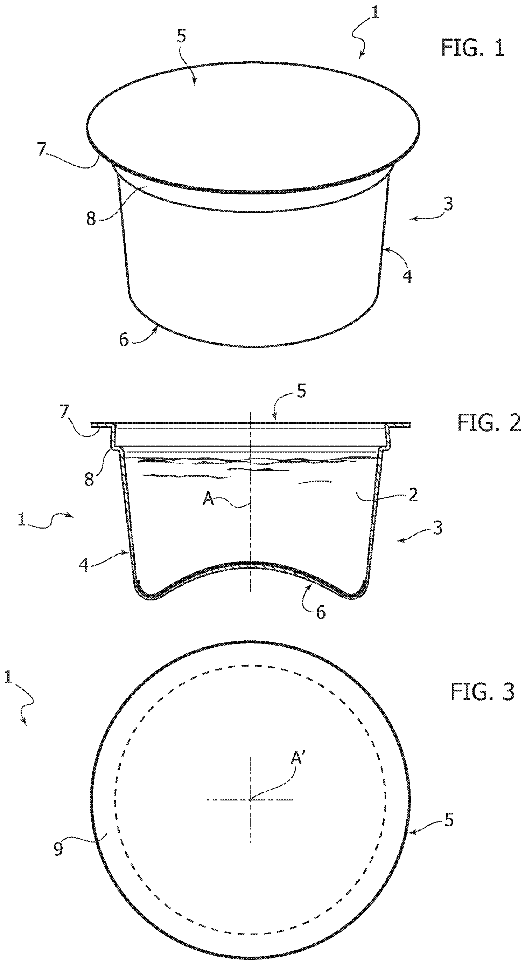

Figures 1, 2, and 3 illustrate, by way of example, the general structure of a capsule (or cartridge, according to another current definition) suitable for implementation of the present invention. The capsule, designated by 1, contains directly a dose 2 of at least one substance that is able to form a liquid product via water and/or steam. The dose 2 may be constituted by ground coffee or by another precursor of a liquid product, such as for example tea, powdered or granular chocolate, products for preparing broths and soups, beverages and infusions of various nature. In what follows, for simplicity, reference will be made to preparation of coffee, with the dose 2 that is hence understood as being constituted by ground coffee.

The structure of the capsule 1 is as a whole shaped substantially like a bowl or small cup, defining a chamber which directly receive the dose 2, and comprises a capsule body 3 with a peripheral or circumferential wall 4, a top face 5, and a bottom 6. As is visible in figure 3, in this case the dose 2 is at least partly in contact with the inner surface of the wall 4. In the example, the top face 5 and the bottom 6 are generally transverse walls - here defined only for simplicity also as "top wall" and "bottom wall" - that axially close the body 3 at the opposite ends of the circumferential wall 4.

In the example illustrated, the capsule 1 is a hermetically closed capsule, with the top face or wall 5 that is constituted by a sealing foil, whereas the bottom 6 is without openings and is made of a single piece with the circumferential wall 4. The body 3 is generally semirigid and is preferably made of moulded plastic material, for example a polypropylene-based material, even though use of an aluminium-based material or a compostable material is not ruled out. The foil 5 is made of a flexible sheet material, in particular, though not exclusively, an aluminium-based material.

The foil 5 is secured, for example via heat-sealing or gluing, to the wall 4 at an annular upper flange 7 thereof, which surrounds the mouth part of the body 3 and extends outwards in a direction transverse to a central axis A of the capsule 1, at the upper end of the wall 4. The capsule 1 hence has an asymmetrical shape with respect to a plane passing through the flange 7, but has a symmetry of revolution around the axis A, as clearly visible in figures 1-3. In the example, since the capsule 1 is a sealed capsule, the foil 5 is impermeable and is secured directly in a fluid-tight way to the flange 7, at least on the upper surface of the latter.

In the case exemplified, the body 3 has a conformation shaped like a cup or a bowl that diverges from the bottom 6 towards the end closed by the foil 5. Preferably, this divergent conformation has the shape of a truncated cone, even though this shape is not imperative, in so far as the capsule 1 may as a whole present different shapes, for example a substantially cylindrical shape or a substantially hemispherical shape or a cup shape. In the non-limiting example represented, the bottom 6 is shaped like a concave vault, with the concavity of the vault oriented towards the outside of the capsule 1. Also in this case, the choice of this conformation is not imperative, in so far as the capsule 1 could have, for example, a vault-shaped bottom wall 6 with the concavity facing the inside of the capsule 1, or else a plane or substantially plane bottom wall. In the example illustrated, the wall 4 moreover defines a widening 8 in the proximity of the flange 7, the presence of which does not constitute an essential characteristic of the invention.

Unlike the prior art described in the introductory part of the present description, the foil 5 of the capsule 1 according to the invention is circular; i.e., it does not present portions generally projecting with respect to its circumference (as is clearly visible in figures 1-3, also the foil 5has a symmetry of revolution around a respective central axis, here coinciding with the axis A). However, as will emerge clearly hereinafter, the foil 5 is in any case a foil that is removable or can be peeled off, having at least one grippable portion the proximal border of which is defined by a corresponding portion of the circular border the foil. At least one of the foil 5 and the flange 7 is pre-arranged for enabling application of a tensile force on the grippable portion, or else on the grippable portion and a corresponding removable portion of the flange. In this way, the foil 5 can be peeled away from the flange 7, or else separated from the rest of the body of the capsule together with a flange part.

As will emerge clearly hereinafter, in the case of the present invention, the grippable portion for peeling off or removing the foil 5 is defined within an annulus-shaped (i.e., a circular crown) area of the foil itself, designated by 9 in Figure 3, where the centre of this area 9 corresponds to the centre A' of the foil 5 and has an outer circumference that corresponds to the circumference of the foil. In the example of Figure 3, the inner and outer circumferences of the annulus 9 basically correspond to the inner and outer circumferences of the flange 7, which also has an annulus-shaped shape, the outer border of which is also circular.

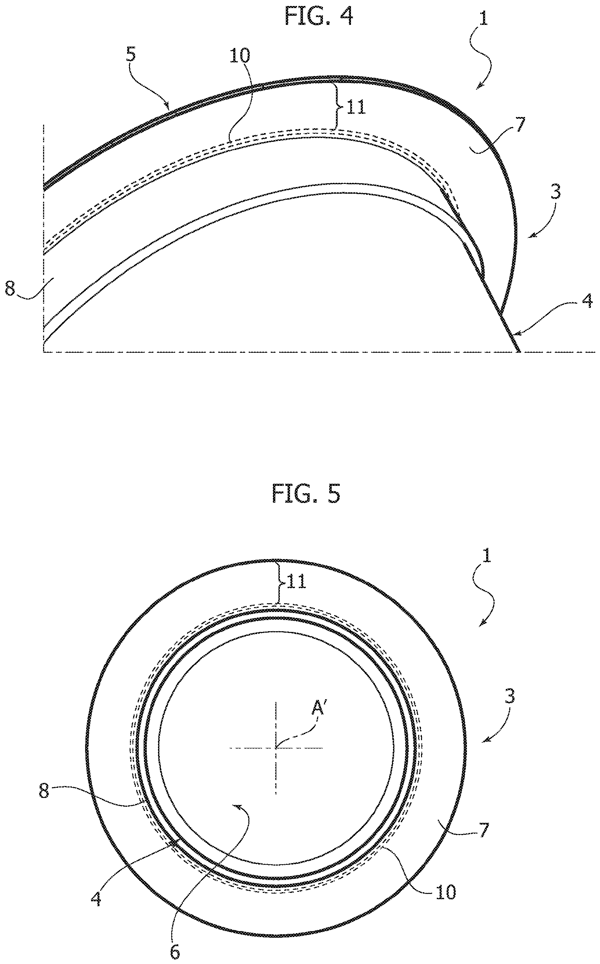

In one embodiment of the invention, the flange 7 has at least one weakening line that defines a removable portion of the flange itself. Laid on said removable portion of the flange 7 (i.e., superimposed) and secured thereon is a corresponding portion of the foil 5 that provides the aforesaid grippable portion, which can be used for removal of the foil. Figures 4 and 5 illustrate an embodiment of this type, with the aforesaid weakening line of the flange 7 that is designated by 10. The weakening line 10 here has a circular development, or in any case a development at least approximately centred on the axis A of the capsule 1, as may be clearly appreciated from Figure 5. In this way, as may be inferred, the removable portion of the flange 7, designated in Figure by 11, has a generally annular shape.

Hence, as may be seen, an annular peripheral portion of the foil 5, including its circular border, superimposed to the flange 7 and secured thereto, for example via heat-sealing or gluing, without parts that project with respect to the flange 7 or that project therefrom in an appreciable way. The above annular peripheral portion of the foil 5 here substantially coincides with the annulus 9 of Figure 3 and provides as a whole the grippable portion for removal of the foil 5. Notwithstanding the absence of projecting parts, it is possible for a user to grip corresponding areas of the flange 7 and of the aforesaid annular portion of the foil 5 between two fingers of his hand (for example, the thumb and forefinger), and then exert a pull aimed at producing tearing and detachment of the removable portion 11, thereby removing also the foil 5 from the rest of the body 3 of the capsule 1. After removal of the foil 5 with the corresponding removable portion 11 of the flange 7, the spent coffee can be disposed of separately from the structure of the capsule 1.

A solution of this type is particularly advantageous when the foil 5 and the walls 4 and 6 of the body 3 are made of similar or compatible materials for purposes of disposal; for example, they are both made of plastic material or both made of an aluminium-based material. However, not excluded from the scope of the invention is use of the solution of Figures 4 and 5 in the case where the foil 5 and the rest of the body 3 are made of different materials, for example with the foil 5 made of an aluminium-based material and the rest of the body 3 made of plastic or compostable material, or vice versa.

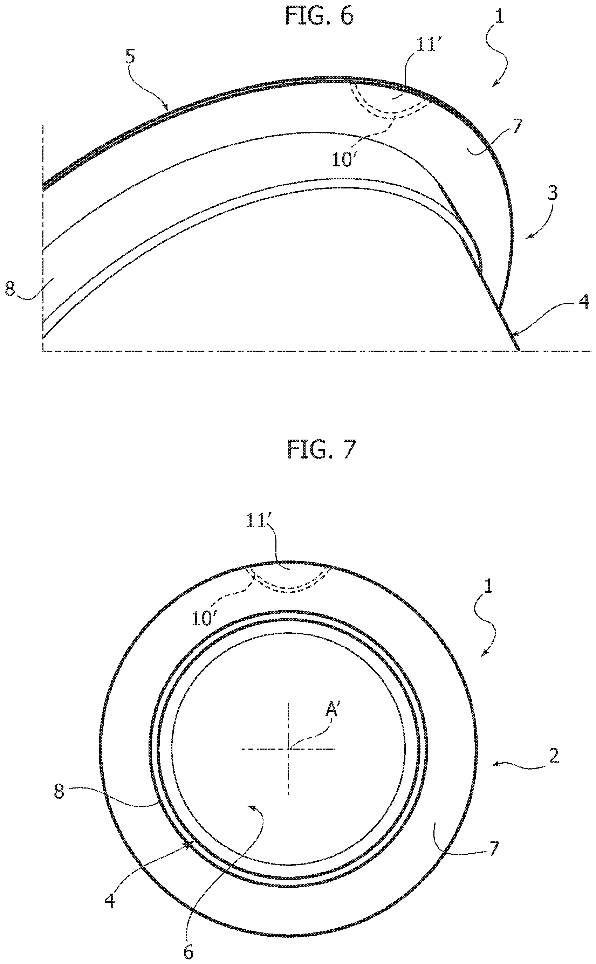

Figures 6 and 7 illustrate a different embodiment whereby the weakening line defined in the flange 7 extends between two points of the outer border of the latter that are set apart from one another, with the removable portion of the flange that is substantially comprised between the weakening line and the outer border of the flange itself. In the example illustrated, the weakening line, designated by 10', has a generally curved or semicircular shape, defining a corresponding removable portion 11' of the flange 7.

As may be appreciated, also this embodiment is distinguished by the absence of projecting parts of the foil 5, or of parts of the foil that project laterally with respect to the outer circumference of the annulus-shaped flange 7. Also in this case, on the other hand, the user can grip the removable portion 11' and a corresponding part of the foil 5, which provides its grippable portion, between two fingers of his hand. A subsequent pulling action produces detachment of the portion 11' and peeling of the foil 5 away from the rest of the flange 7. Obviously, different geometries and dimensions for the trace of the weakening line 10', and hence of the removable portion 11', are possible. It will also be appreciated that the flange 7 can be provided with a plurality of weakening lines 10' and of corresponding grippable portions of the foil.

The embodiments of Figures 4-5 and 6-7 can be implemented via a simple pre-arrangement of the mould used for the production of the capsule body, and specifically of the mould for obtaining the piece that integrates the circumferential wall 4 with the corresponding flange 7. The weakening line 10 or 10' is preferably constituted by a reduction of thickness of the flange 7, but not excluded is the possibility of obtaining it via a succession of scores or perforations, in particular in the case of the embodiment of Figures 6 and 7.

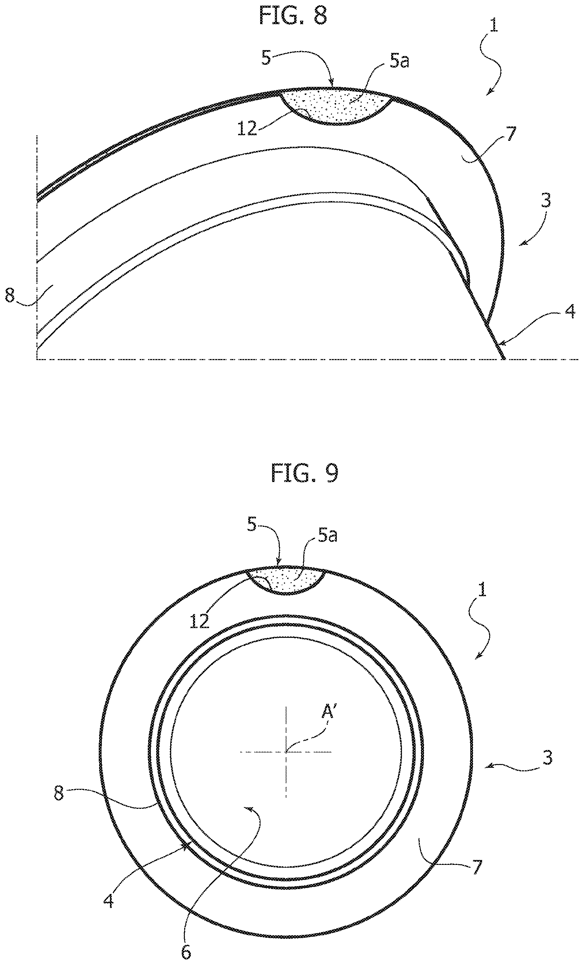

In one embodiment, the outer border of the flange 7 has at least one indentation with respect to its outer maximum circumference, which is overlaid by a corresponding portion of the foil 5, with said portion of the foil that provides a grippable peel-off portion. The embodiment in question is exemplified in Figures 8 and 9, where the aforesaid indentation of the flange is designated by 12 and where the grippable portion of the foil is designated by 5a.

Not even in this solution does the foil 5 have parts projecting from its circumference or from the maximum circumference of the flange 7. In this case, the user can grip directly, with two fingers of his hand, the peel-off portion 5a and exert a pulling action aimed at producing detachment of the foil 5 from the flange 7. Obviously, also in this case different geometries are possible for the indentation 12, and the flange 7 may be provided with more than one of the above indentations. Also the embodiment of Figures 8 and 9 can be obtained via a simple pre-arrangement of the equipment used for the production of the body 3 of the capsule, and specifically of the mould necessary for obtaining the piece that integrates the circumferential wall 4 and the flange 7.

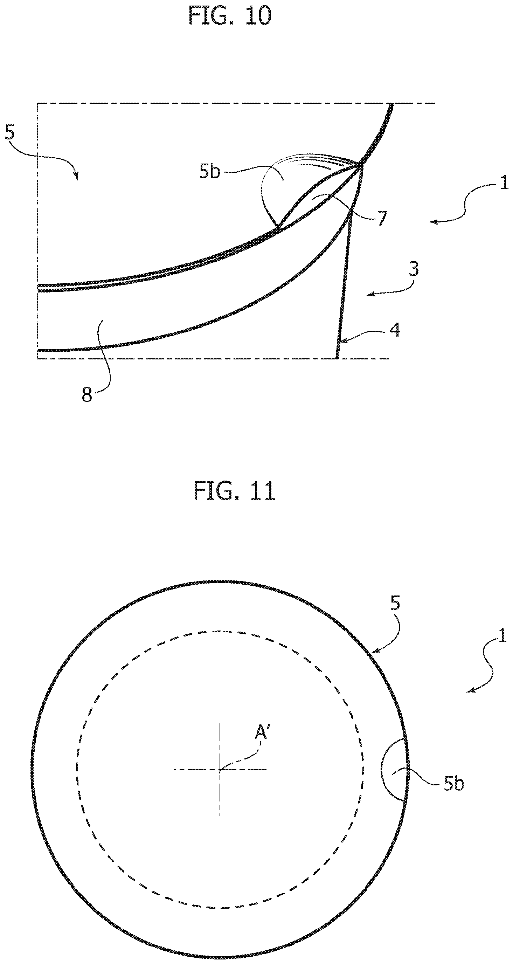

In one embodiment, the foil 5 is laid over and secured to the flange 7 so as to present at least one area of superposition in which the foil 5 and the flange 7 are free from mutual engagement, where said area of superposition provides a grippable peel-off portion. This embodiment is exemplified in Figures 10 and 11. In Figure 10 the peel-off portion is designated by 5b, and corresponds to an area of the foil 5 that is laid over the flange 7 in the absence of fixing between the parts in question. It should be noted that in Figure 10 the distance between the portion of foil 5b and the flange 7 has been deliberately accentuated to enable a more immediate understanding of the embodiment. Also in this case, different geometries are possible for the portion 5b, such as the provision of a number of portions 5b.

It will be appreciated that also in this embodiment the foil 5 does not have parts projecting from its circumference or from the outer circumference of the flange 7. In this case, if necessary, the user can slide a fingernail or the tip of an ordinary kitchen implement (for example, a knife) between the foil and the flange in order to lift the portion 5b, and then withhold it on the opposite side with a finger in order to exert the pulling action aimed at producing detachment of the foil 5 from the flange 7. Also this embodiment can be implemented in a very simple way. For this purpose, pre-arrangement of the foil and/or of the flange is obtained avoiding the need to secure to the upper surface of the flange 7 the area of the foil 5 corresponding to the portion 5a, for example not subjecting this area to heat-sealing or gluing. Also in this case, no additional operations are hence required.

As has been seen, in all the embodiments described above the foil 5 is a circular foil, i.e., having a symmetry of revolution around a respective axis. In this way, for the purposes of implementation of the invention, circular foils of a classic type may be used, i.e., ones having a shape similar to the one commonly used in capsules not provided with a peel-off or removable wall. As has been seen, moreover, the grippable portion provided according to the invention is in any case defined within an annulus-shaped area 9 of the foil 5 (see again Figure 3), whose centre corresponds to the centre A' of the foil itself - and hence to the axis A of the body 3 defining the flange 7 - and the outer circumference of which corresponds to the circumference of the foil. Thanks to this characteristic, the foil 5 does not have parts projecting beyond the circumference of the foil itself and beyond the diameter of the flange of the capsule. In this way, the risks of the prior art highlighted in the introductory part of the present description are virtually eliminated, without thereby jeopardizing the possibility of easy removal of the foil. Finally, as has been said, pre-arrangement of the flange 7 and/or of the foil 5 necessary for the purposes of implementation of the invention entails a simple initial setting of the production equipment, without any need for having to carry out additional operations during production, as is instead the case with the solution according to FR 2973209 A1.

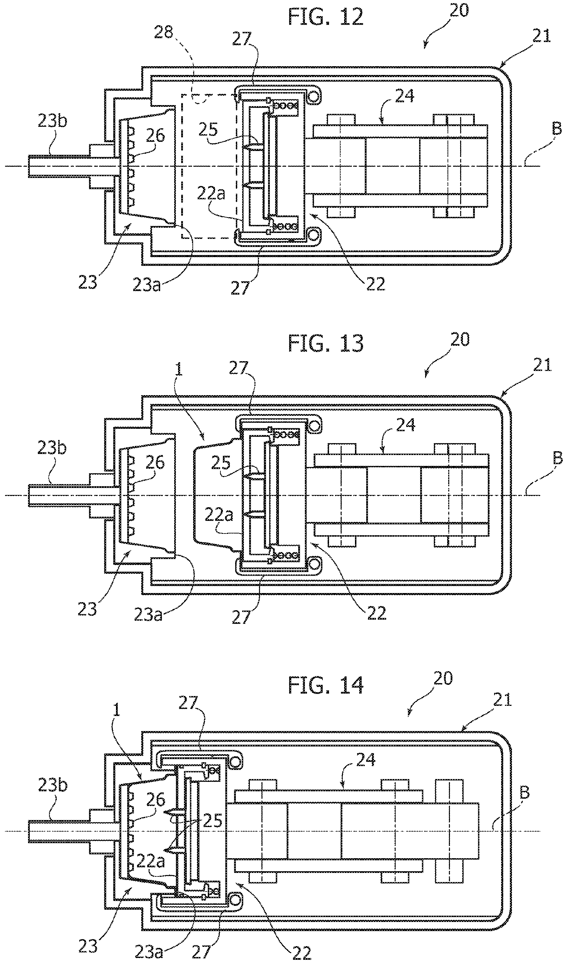

Figures 12, 13, and 14 exemplify use of a capsule 1 according to the invention.

In the above figures, a machine 20 for preparing liquid products is represented in a partial and schematic form (these figures are schematic cross sections of the machine according to a horizontal plane). The machine 20 has a delivery assembly 21 with a brewing chamber configured for receiving a capsule 1 and for delivering the liquid food product following upon contact between a supply fluid, such as water and/or steam, and the contents of the capsule. The assembly 21 may be of any conception known in the sector, for example as described in one or more of the documents Nos. WO 2013/182923, WO 2013/150480, WO 2013/140282, WO 2013/111088, WO 2013/038318, WO 2012/168917, WO2012168918 filed in the name of the present applicant.

In the schematic example, the brewing chamber comprises a first part and a second part, of which at least one can be displaced with respect to the other. In the example, the parts of chamber are an injector 22 and a capsule holder 23, with the former that can be displaced with respect to the latter via a mechanism of a type in itself known, designated as a whole by 24. Obviously possible - according to known techniques - are reverse arrangements of the parts, i.e., with the injector 22 stationary and the capsule holder 23 displaceable, or again solutions in which the capsule holder 23 and the injector 22 are both displaceable. In the example, displacement between the injector 22 and the capsule holder 23 is substantially linear, according to the axis designated by B, but not excluded from the field of the invention is use of delivery assemblies with a roto-translational movement.

Irrespective of the type of movement, the injector 22 and the capsule holder 23 can assume a space-apart position (i.e., where they are set apart from one another - visible in Figure 12) to enable loading of the capsule 1 into the assembly 21, and an approached position (i.e., where they are close to one another - visible in Figure 14) to enable injection of a fluid into the capsule 1 and delivery of the resulting liquid product.

The injector and capsule holder have respective facing contrast surfaces 22a and 23a, which, in the aforesaid approached position, hold in a fluid-tight way between them the flange of the capsule 1 and a corresponding annular portion of its foil. In the example, the injector 22 and the capsule holder 23 have respective perforating devices 25 and 26, for perforating or in any case tearing the foil of the capsule 1 and its bottom in order, respectively, to inject water and/or steam into the capsule itself and to enable exit of the product resulting from infusion. Designated by 27 are retention members, configured for temporarily keeping the capsule in an intermediate loading position, generally coaxial to the injector 22 and to the capsule holder 23.

In use, with the injector 22 and the capsule holder 23 in the spaced-apart position (Figure 12), the capsule 1 is inserted from above into the assembly 30 through a purposely provided loading passage (not visible). After insertion, the capsule 1 is taken up by the members 27, which keep it in its corresponding intermediate loading position (Figure 13). Next, the mechanism 24 is operated in order to bring the injector and the capsule holder into the approached position. With the assembly in this condition (Figure 14), a fluid under pressure, such as water and/or steam, is injected into the capsule 1 through passages made in the foil by the perforating device 25 (the line for supply of the pressurized fluid has not been represented, for reasons of greater clarity of the drawings). The result of the infusion then comes out from the capsule through passages made in the bottom of the capsule via the perforating device 26, with the liquid product thus obtained that can flow out of the capsule holder 23 through a purposely provided duct 23b. Via a reverse operation of the mechanism 24, the injector and the capsule holder are then brought back into the spaced-apart position, and during this displacement the capsule 1 is induced to drop by gravity towards a bottom discharge passage, shown schematically only in Figure 12 and designated by 28, generally opposite to the loading passage.

It will be appreciated that, in the position of Figure 14 where the injector and capsule holder are close to one another, the grippable portion for enabling peeling-off or removal of the foil of the capsule 1, as described previously, is completely or at least partially held between the contrast surfaces 22a and 23a of the injector and the capsule holder. In any case, the absence of projecting parts of the foil of the capsule 1 with respect to the maximum diameter of its flange prevents the risks present in the known art referred to in the introductory part of the description. The spent capsule discharged from the assembly 21 can then be disposed of in a differentiated way. As explained previously, for this purpose, it is possible for the user to exert a pulling action on the grippable portion of the foil and on the possible corresponding removable portion of the flange in order to open the capsule and separate the spent contents thereof from the other parts of the capsule body.

From the above description, the characteristics of the present invention emerge clearly, as likewise the advantages afforded thereby.

It is evident that numerous variations may be made by the person skilled in the art to the capsule described by way of example, without thereby departing from the scope of the invention as defined in the ensuing claims.

In the embodiments previously described, the foil 5 is secured to the flange 7 of the capsule at the upper surface of the latter, but not excluded from the field of the invention is the case where the circular foil 5 has also a portion folded and/or secured on the lower surface of the flange 7.

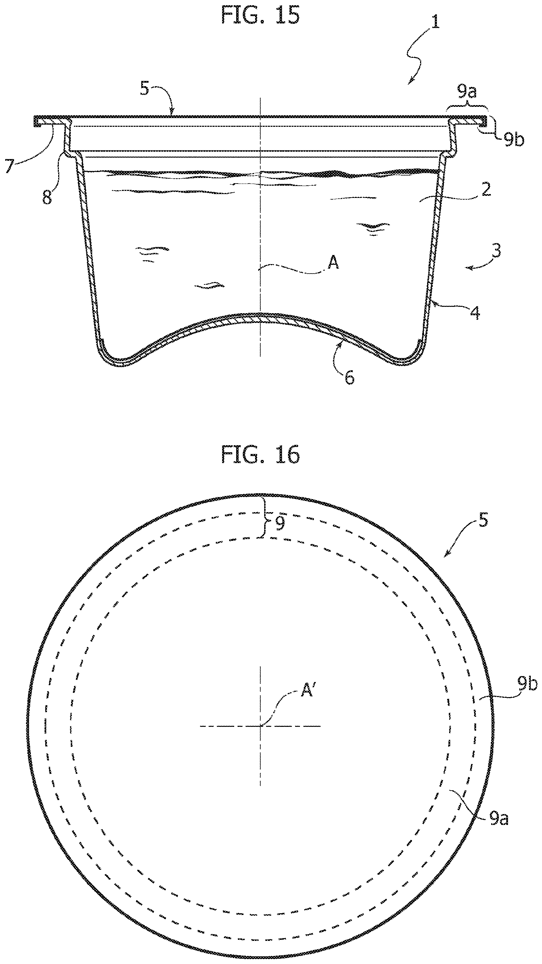

One such solution is exemplified in Figures 15 and 16, where the circumference of the foil 5 is greater that in the case illustrated in Figures 1 to 3, given the same outer circumference of the flange 7. It should be noted that Figure 16 illustrates the development of the foil 5 prior to its application on the flange 7, and hence without folded parts. In one such embodiment, the inner circumference of the annulus-shaped area 9 of the foil 5 substantially corresponds to the inner circumference of the flange 7, whereas the outer circumference of the annulus-shaped area 9 (corresponding to the circular rim of the foil) is larger than the outer circumference of the flange 7. The foil 5 hence has an annular intermediate portion, designated by 9a, which is to be laid over the upper surface of the flange 7. The annular peripheral portion of the foil 5, which includes the corresponding circular border and is designated by 9b, is instead in part folded on the outer profile of the flange 7 and in part laid on the lower surface of the flange itself. This solution may be applied, for example, to the case of a capsule 1 the foil 5 of which is secured via seaming to the flange 7, in particular when the two parts in question are made of an aluminium-based material. For embodiments of this type, the solution described with reference to Figures 4 and 5 is particularly advantageous, even though not excluded in principle are solutions such as those of Figures 6 and 7, 8 and 9, and 10 and 11.

For the purposes of implementation of the invention, it is particularly advantageous for the circumferential wall 4 of the capsule to have an inclination comprised between 0 and 50° and/or for said wall to be without the widening designated by 8 in the figures. This arrangement makes it possible to provide a wider annular flange 7 in the radial direction, with the consequent possibility of increasing the size of the grippable portion of the foil.

In a particularly advantageous embodiment, the area of the foil that is to provide the grippable peel-off or removable portion present a graphic or visual distinguishing marking in order to render more immediate the operation of removal of the foil. This can be obtained, for example, by bestowing on said grippable portion a colouring or a particular appearance different from the rest of the visible part of the foil, or again by providing on the latter an appropriate graphic indication.

The invention has been described with reference to a capsule of a hermetically sealed type, but it will be appreciated that the solution according to the invention can be applied also to the case of capsules having a top face and/or a bottom provided with holes. For example, the foil 5 may be a permeable foil, made of porous material or having a plurality of openings, and/or the bottom 6 of the capsule body may present a plurality of openings, with the foil 5 that is impermeable or else permeable. Also for these cases the solution according to the invention in any case enables an effective differentiated disposal of the components of the capsule, after its use.

Finally, it will be appreciated that the invention can be applied also to the case of a capsule of the type referred to having a sealing foil that can be removed prior to its corresponding loading into the machine.

## Claims

1. A capsule for the preparation of a liquid food product configured for insertion into a brewing machine (M), the capsule (1) containing directly at least one substance (2) capable to form the liquid food product via water and/or steam and having a body (3) that comprises a circumferential wall (4), a top face at a first end of the circumferential wall (4), and a bottom (6) opposite to the top face (5),
wherein the circumferential wall (4) has an annular flange (7) that extends outwards at the first end of the circumferential wall (4), the annular flange (7) having an outer circumference and an inner circumference,
wherein the top face comprises a foil (5), which is secured to the flange (7) and has at least one grippable portion (5a; 5b), the grippable portion (5a; 5b) having a proximal border defined by a corresponding portion of the border of the foil (5),
the capsule (1) being **characterized in that**:
- the foil (5) is circular;
- an annular peripheral portion (9b) of the foil (5) including its border is laid over the flange (7);
- the grippable portion (5a; 5b) is defined within an annulus-shaped area (9) of the foil (5), whose centre corresponds to the centre (A') of the foil itself and whose outer circumference corresponds to the circumference of the foil (5);
- at least one of the foil (5) and the flange (7) is pre-arranged for enabling application of a tensile force on the grippable portion (5a; 5b) or else on the grippable portion and a corresponding removable portion of the flange (7), wherein:
- the outer circumference and the inner circumference of the annular flange (7) substantially correspond to the outer circumference and the inner circumference of the annulus-shaped area (9) of the foil (5), respectively,
or else
- the inner circumference of the annulus-shaped area (9) of the foil (5) substantially corresponds to the inner circumference of the flange (7), and
the outer circumference of the annulus-shaped area (9) of the foil (5) is larger than the outer circumference of the flange (7),
the foil (5) has an annular intermediate portion (9a) that is laid on an upper surface of the flange (7), and
the annular peripheral portion (9b) of the foil (7) is laid on a lower surface of the flange (7).

2. The capsule according to Claim 1, wherein the flange (7) has at least one weakening line (10; 10') defining a removable portion (11; 11') of the flange itself, on the removable portion (11; 11') of the flange (7) there being laid a corresponding portion of the foil (5) that provides the grippable portion.

3. The capsule according to Claim 2, wherein the weakening line (10) of the flange (7) has a circular development, said removable portion (11) of the flange (7) having an annular shape.

4. The capsule according to Claim 2, wherein the weakening line (10') extends between two points of an outer border of the flange (7) that are set apart from one another, said removable portion (11') of the flange (7) being comprised between the weakening line (10') and the outer border of the flange (7).

5. The capsule according to Claim 1, wherein the foil (5) is laid on and secured to the flange (7) so as to present at least one area of superposition (5b) at which the foil (5) and the flange (7) are free from mutual engagement, said at least one area of superposition (5b) providing the grippable portion.

6. The capsule according to Claim 1, wherein the flange (7) has an outer border with at least one indentation (12) that is overlaid by a corresponding portion (5a) of the foil (5), said corresponding portion (5a) providing the grippable portion.

7. The capsule according to any one of the preceding claims, wherein the foil (5) is an impermeable foil hermetically secured to the flange (7), the capsule (1) being a sealed capsule.

8. The capsule according to any one of Claims 1-6, wherein the foil (5) is a permeable foil, in particular made of porous material and/or having a plurality of openings.

9. The capsule according to any one of the preceding claims, wherein the grippable portion (5a; 5b) of the foil (5) presents a distinguishing graphic marking.

10. The capsule according to any one of the preceding claims, wherein the circumferential wall (4) has an inclination comprised between 0 and 50°.

11. The capsule according to any one of the preceding claims, wherein at least the annular peripheral portion of the foil (5) is fixed to the flange (7) via at least one from among heat-sealing, seaming, and gluing.

12. A system for the preparation of liquid products, comprising:
- a capsule (1) according to one or more of Claims 1 to 11;
- a machine (20) for preparing liquid food products via capsules, the machine having a delivery assembly (21) with a brewing chamber (22, 23) configured for receiving one said capsule (1) and for delivering the liquid food product following upon contact between a supply fluid, such as water and/or steam, and the contents (2) of the capsule (1),
wherein the brewing chamber (22, 23) comprises a first part of chamber (22) and a second part of chamber (23), at least one part of chamber (22) being displaceable with respect to the other part of chamber (23) between a spaced-apart position, to enable loading of the capsule (1) into the delivery assembly (21), and an approached position, to enable injection of the fluid into the capsule (1) and delivery of the liquid food product,
wherein the first part of chamber (22) and the second part of chamber (23) have facing contrast surfaces (22a, 23a) for holding between them the flange (7) of the capsule (1) and a corresponding annular portion of the foil (5) in the aforesaid approached position, in said position the grippable portion (5a; 5b) of the foil (5) being completely or at least partially held between the contrast surfaces (22a, 23a).

13. A method for the preparation of liquid food products comprising the steps of:
a) providing a capsule (1) according to one or more of Claims 1 to 11;
b) providing a machine for preparing liquid products (20) having a delivery assembly (21) that comprises a brewing chamber (22, 23) configured for receiving one said capsule (1) and for delivering the liquid food product following upon contact between a supply fluid, such as water and/or steam, and the contents (2) of the capsule (1), the brewing chamber comprising a first part of chamber (22) and a second part of chamber (23) at least one of which is displaceable with respect to the other between a spaced-apart position, to enable loading of the capsule (1) into the delivery assembly (21), and an approached position, to enable injection of the fluid into the capsule (1) and delivery of the liquid food product;
c) inserting the capsule (1) into the delivery assembly (21) with the two parts of chamber (22, 23) in the aforesaid spaced-apart position;
d) operating an actuation mechanism (24) of the delivery assembly (21) to bring the two parts of chamber (22, 23) into the aforesaid approached position;
e) injecting a fluid, such as water and/or steam, into the capsule (1) for preparing the liquid food product and delivering it;
f) bringing back the two parts of chamber (22, 23) into the aforesaid spaced-apart position and causing extraction of the capsule (1) from the delivery assembly (21),
wherein, in the aforesaid approached position, the flange (7) of the capsule (1) and a corresponding annular portion of the foil (5) are held between facing contrast surfaces (22a, 23a) of the first part of chamber (22) and of the second part of chamber (23), in said position the grippable portion (5a; 5b) of the foil (5) of the capsule (1) being completely or at least partially held between the contrast surfaces (22a, 23a),
and wherein, after step f), at least the foil (5) of the capsule (1) is removed by applying a tensile force on the grippable portion (5a; 5b) or else on the grippable portion and a corresponding removable portion of the flange (7).

## Patentansprüche

1. Kapsel zum Zubereiten eines flüssigen Nahrungsmittelprodukts, die zum Einsetzen in eine Brühmaschine (M) ausgelegt ist, wobei die Kapsel (1) direkt mindestens eine Substanz (2) enthält, die fähig ist, das flüssige Nahrungsmittelprodukt über Wasser und/oder Dampf zu bilden, und einen Körper (3) aufweist, der eine Umfangswand (4), eine Oberseitenfläche an einem ersten Ende der Umfangswand (4) und einen Boden (6) der Oberseitenfläche (5) entgegengesetzt umfasst,
wobei die Umfangswand (4) einen Ringflansch (7) aufweist, der sich an dem ersten Ende der Umfangswand (4) nach außen erstreckt, wobei der Ringflansch (7) einen Außenumfang und einen Innenumfang aufweist,
wobei die Oberseitenfläche eine Folie (5) umfasst, die an dem Flansch (7) befestigt ist und mindestens einen greifbaren Abschnitt (5a; 5b) aufweist, wobei der greifbare Abschnitt (5a; 5b) einen proximalen Rand aufweist, der von einem entsprechenden Abschnitt des Rands der Folie (5) definiert ist,
die Kapsel (1) **dadurch gekennzeichnet, dass**
- die Folie (5) kreisförmig ist;
- ein ringförmiger Umfangsabschnitt (9b) der Folie (5), der ihren Rand beinhaltet, über den Flansch (7) gelegt ist;
- der greifbare Abschnitt (5a; 5b) innerhalb einer ringförmigen Fläche (9) der Folie (5) definiert ist, deren Mitte der Mitte (A') der Folie selbst entspricht, und deren Außenumfang dem Umfang der Folie (5) entspricht;
- wobei mindestens eine der Folie (5) und des Flanschs (7) vorab eingerichtet ist, um das Anlegen einer Zugkraft an den greifbaren Abschnitt (5a; 5b) oder stattdessen auf den greifbaren Abschnitt und einen entsprechenden abnehmbaren Abschnitt des Flanschs (7) zu ermöglichen,
wobei:
- der Außenumfang und der Innenumfang des ringförmigen Flanschs (7) im Wesentlichen jeweils dem Außenumfang und dem Innenumfang der ringförmigen Fläche (9) der Folie (5) entsprechen,
oder aber
- der Innenumfang der ringförmigen Fläche (9) der Folie (5) im Wesentlichen dem Innenumfang des Flanschs (7) entspricht, und
der Außenumfang der ringförmigen Fläche (9) der Folie (5) größer ist als der Außenumfang des Flanschs (7),
die Folie (5) einen ringförmigen Zwischenabschnitt (9a) aufweist, der auf eine obere Oberfläche des Flanschs (7) gelegt ist, und
der ringförmige Umfangsabschnitt (9b) der Folie (5) auf eine untere Oberfläche des Flanschs (7) gelegt ist.

2. Kapsel nach Anspruch 1, wobei der Flansch (7) mindestens eine Schwächungslinie (10; 10') aufweist, die einen abnehmbaren Abschnitt (11; 11') des Flanschs selbst definiert, wobei auf dem abnehmbaren Abschnitt (11; 11') des Flanschs (7) ein entsprechender Abschnitt der Folie (5) aufgelegt ist, der den greifbaren Abschnitt bereitstellt.

3. Kapsel nach Anspruch 2, wobei die Schwächungslinie (10) des Flanschs (7) eine kreisförmige Ausdehnung aufweist, wobei der abnehmbare Abschnitt (11) des Flanschs (7) eine Ringform aufweist.

4. Kapsel nach Anspruch 2, wobei sich die Schwächungslinie (10') zwischen zwei Stellen eines Außenrandes des Flanschs (7) erstreckt, die voneinander beabstandet sind, wobei der abnehmbare Abschnitt (11') des Flanschs (7) zwischen der Schwächungslinie (10') und dem Außenrand des Flanschs (7) liegt.

5. Kapsel nach Anspruch 1, wobei die Folie (5) auf den Flansch (7) gelegt und daran derart befestigt ist, dass sie mindestens eine Überlagerungsfläche (5b) aufweist, an der die Folie (5) und der Flansch (7) von gegenseitigem Eingriff frei sind, wobei die mindestens eine Überlagerungsfläche (5b) den greifbaren Abschnitt bereitstellt.

6. Kapsel nach Anspruch 1, wobei der Flansch (7) einen Außenrand mit mindestens einer Vertiefung (12) aufweist, die von einem entsprechenden Abschnitt (5a) der Folie (5) überlagert ist, wobei der entsprechende Abschnitt (5a) den greifbaren Abschnitt bereitstellt.

7. Kapsel nach einem der vorstehenden Ansprüche, wobei die Folie (5) eine undurchlässige Folie ist, die hermetisch an dem Flansch (7) befestigt ist, wobei die Kapsel (1) eine versiegelte Kapsel ist.

8. Kapsel nach einem der Ansprüche 1 bis 6, wobei die Folie (5) eine durchlässige Folie ist, die insbesondere aus einem durchlässigen Material hergestellt ist und/oder eine Vielzahl von Öffnungen aufweist.

9. Kapsel nach einem der vorstehenden Ansprüche, wobei der greifbare Abschnitt (5a; 5b) der Folie (5) eine charakteristische grafische Kennzeichnung aufweist.

10. Kapsel nach einem der vorstehenden Ansprüche, wobei die Umfangswand (4) eine Neigung aufweist, die zwischen 0 und 50° liegt.

11. Kapsel nach einem der vorstehenden Ansprüche, wobei mindestens der ringförmige Umfangsabschnitt der Folie (5) an dem Flansch (7) über mindestens eine aus Wärmeversiegelung, Schweißnaht und Kleben befestigt ist.

12. System zum Zubereiten flüssiger Produkte, das Folgendes umfasst:
- eine Kapsel (1) nach einem oder mehreren der Ansprüche 1 bis 11 ;
- eine Maschine (20) zum Zubereiten flüssiger Nahrungsmittelprodukte über Kapseln, wobei die Maschine eine Abgabeanordnung (21) mit einer Brühkammer (22, 23) aufweist, die konfiguriert ist, um eine Kapsel (1) aufzunehmen und das flüssige Nahrungsmittelprodukt im Anschluss an einen Kontakt zwischen einer Versorgungsflüssigkeit, wie Wasser und/oder Dampf, und dem Inhalt (2) der Kapsel (1) abzugeben,
wobei die Brühkammer (22, 23) ein erstes Kammerteil (22) und ein zweites Kammerteil (23) umfasst, wobei mindestens ein Kammerteil (22) in Bezug auf das andere Kammerteil (23) zwischen einer beabstandeten Position, um das Laden der Kapsel (1) in die Abgabeanordnung (21) zu ermöglichen, und einer angenäherten Position, um das Einspritzen der Flüssigkeit in die Kapsel (1) und das Abgeben des flüssigen Nahrungsmittelprodukts zu ermöglichen, verlagerbar ist,
wobei das erste Kammerteil (22) und das zweite Kammerteil (23) einander zugewandte Kontrastoberflächen (22a, 23a) aufweisen, um dazwischen den Flansch (7) der Kapsel (1) und einen entsprechenden Ringabschnitt der Folie (5) in der oben erwähnten angenäherten Position zu halten, wobei der greifbare Abschnitt (5a; 5b) der Folie (5) in dieser Position vollständig oder zumindest teilweise zwischen den Kontrastoberflächen (22a, 23a) gehalten ist.

13. Verfahren zum Zubereiten flüssiger Nahrungsmittelprodukte, das folgende Schritte umfasst:
a) Bereitstellen einer Kapsel (1) nach einem oder mehreren der Ansprüche 1 bis 11;
b) Bereitstellen einer Maschine zum Zubereiten flüssiger Produkte (20), die eine Abgabeanordnung (21) aufweist, die eine Brühkammer (22, 23) umfasst, die zum Aufnehmen einer Kapsel (1) und zum Abgeben des flüssigen Nahrungsmittelprodukts im Anschluss an einen Kontakt zwischen einer Versorgungsflüssigkeit, wie Wasser und/oder Dampf, und dem Inhalt (2) der Kapsel (1) ausgelegt ist, wobei die Brühkammer ein erstes Kammerteil (22) und ein zweites Kammerteil (23) umfasst, von denen mindestens eines in Bezug auf das andere zwischen einer beabstandeten Position, um das Laden der Kapsel (1) in die Abgabeanordnung (21) zu ermöglichen, und einer angenäherten Position, um das Einspritzen des Fluids in die Kapsel (1) und das Abgeben des flüssigen Nahrungsmittelprodukts zu ermöglichen, verlagerbar ist;
c) Einsetzen der Kapsel (1) in die Abgabeanordnung (21) mit den zwei Kammerteilen (22, 23) in der oben erwähnten beabstandeten Position;
d) Bedienen eines Betätigungsmechanismus (24) der Abgabeanordnung (21), um die zwei beabstandeten Kammerteile (22, 23) in die oben erwähnte angenäherte Position zu bringen;
e) Einspritzen einer Flüssigkeit, wie von Wasser und/oder Dampf, in die Kapsel (1) zum Zubereiten und Abgeben des flüssigen Nahrungsmittelprodukts;
f) Zurückbringen der zwei Kammerteile (22, 23) in die oben erwähnte beabstandete Position und Veranlassen der Extraktion der Kapsel (1) aus der Abgabeanordnung (21),
wobei der Flansch (7) der Kapsel (1) und ein entsprechender ringförmiger Abschnitt der Folie (5) in der oben erwähnten angenäherten Position zwischen einander zugewandten Kontrastoberflächen (22a, 23a) des ersten Kammerteils (22) und des zweiten Kammerteils (23) gehalten werden, wobei in dieser Position der greifbare Abschnitt (5a; 5b) der Folie (5) der Kapsel (1) vollständig oder zumindest teilweise zwischen den Kontrastoberflächen (22a, 23a) gehalten wird,
und wobei nach Schritt f) mindestens die Folie (5) der Kapsel (1) durch Anlegen einer Zugkraft auf den greifbaren Abschnitt (5a; 5b) oder stattdessen auf den greifbaren Abschnitt und einen entsprechenden abnehmbaren Abschnitt des Flanschs (7) entfernt wird.

## Revendications

1. Capsule pour la préparation d'un produit alimentaire liquide configurée pour être insérée dans une machine d'infusion (M), la capsule (1) contenant directement au moins une substance (2) capable de former le produit alimentaire liquide via de l'eau et/ou de la vapeur et ayant un corps (3) qui comprend une paroi circonférentielle (4), une face supérieure au niveau d'une première extrémité de la paroi circonférentielle (4), et un fond (6) opposé à la face supérieure (5),
dans laquelle la paroi circonférentielle (4) a une bride annulaire (7) qui s'étend vers l'extérieur au niveau de la première extrémité de la paroi circonférentielle (4), la bride annulaire (7) ayant une circonférence externe et une circonférence interne,
dans laquelle la face supérieure comprend une feuille (5) qui est fixée sur la bride (7) et a au moins une partie préhensible (5a ; 5b), la partie préhensible (5a ; 5b) ayant une bordure proximale définie par une partie correspondante de la bordure de la feuille (5),
la capsule (1) étant **caractérisée en ce que** :
- la feuille (5) est circulaire ;
- une partie périphérique annulaire (9b) de la feuille (5) comprenant sa bordure est posée sur la bride (7) ;
- la partie préhensible (5a ; 5b) est définie dans une zone de forme annulaire (9) de la feuille (5), dont le centre correspond au centre (A') de la feuille elle-même et dont la circonférence externe correspond à la circonférence de la feuille (5) ;
- au moins l'une parmi la feuille (5) et la bride (7) est pré-agencée pour permettre l'application d'une force de tension sur la partie préhensible (5a ; 5b) ou bien sur la partie préhensible et une partie amovible correspondante de la bride (7),
dans laquelle :
- la circonférence externe et la circonférence interne de la bride annulaire (7) correspondent sensiblement à la circonférence externe et à la circonférence interne de la zone de forme annulaire (9) de la feuille (5), respectivement,
ou bien
- la circonférence interne de la zone de forme annulaire (9) de la feuille (5) correspond sensiblement à la circonférence interne de la bride (7), et
la circonférence externe de la zone de forme annulaire (9) de la feuille (5) est plus grande que la circonférence externe de la bride (7),
la feuille (5) a une partie intermédiaire annulaire (9a) qui est posée sur une surface supérieure de la bride (7), et
la partie périphérique annulaire (9b) de la feuille (5) est posée sur une surface inférieure de la bride (7).

2. Capsule selon la revendication 1, dans laquelle la bride (7) a au moins une ligne d'affaiblissement (10 ; 10') définissant une partie amovible (11 ; 11') de la bride elle-même, sur la partie amovible (11 ; 11') de la bride (7), on pose une partie correspondante de la feuille (5) qui fournit la partie préhensible.

3. Capsule selon la revendication 2, dans laquelle la ligne d'affaiblissement (10) de la bride (7) a un développement circulaire, ladite partie amovible (11) de la bride (7) ayant une forme annulaire.

4. Capsule selon la revendication 2, dans laquelle la ligne d'affaiblissement (10') s'étend entre deux points d'une bordure externe de la bride (7) qui sont écartés l'un de l'autre, ladite partie amovible (11') de la bride (7) étant comprise entre la ligne d'affaiblissement (10') et la bordure externe de la bride (7).

5. Capsule selon la revendication 1, dans laquelle la feuille (5) est posée sur et fixée à la bride (7) afin de présenter au moins une zone de superposition (5b) au niveau de laquelle la feuille (5) et la bride (7) sont dépourvues de mise en prise mutuelle, ladite au moins une zone de superposition (5b) fournissant la partie préhensible.

6. Capsule selon la revendication 1, dans laquelle la bride (7) a une bordure externe avec au moins une indentation (12) qui est recouverte par une partie (5a) correspondante de la feuille (5), ladite partie correspondante (5a) fournissant la partie préhensible.

7. Capsule selon l'une quelconque des revendications précédentes, dans laquelle la feuille (5) est une feuille imperméable hermétiquement fixée sur la bride (7), la capsule (1) étant une capsule scellée.

8. Capsule selon l'une quelconque des revendications 1 à 6, dans laquelle la feuille (5) est une feuille perméable, en particulier réalisée avec un matériau poreux et/ou ayant une pluralité d'ouvertures.

9. Capsule selon l'une quelconque des revendications précédentes, dans laquelle la partie préhensible (5a ; 5b) de la feuille (5) présente une marque graphique distinctive.

10. Capsule selon l'une quelconque des revendications précédentes, dans laquelle la paroi circonférentielle (4) a une inclinaison comprise entre 0 et 50°.

11. Capsule selon l'une quelconque des revendications précédentes, dans laquelle au moins la partie périphérique annulaire de la feuille (5) est fixée sur la bride (7) via au moins l'un parmi le thermosoudage, la soudure et le collage.

12. Système pour la préparation de produits liquides, comprenant :
- une capsule (1) selon une ou plusieurs des revendications 1 à 11;
- une machine (20) pour préparer des produits alimentaires liquides via des capsules, la machine ayant un ensemble de distribution (21) avec une chambre d'infusion (22, 23) configurée pour recevoir l'une desdites capsules (1) et pour distribuer le produit alimentaire liquide suite au contact entre un fluide d'alimentation, tel que de l'eau et/ou de la vapeur, et le contenu (2) de la capsule (1),
dans lequel la chambre d'infusion (22, 23) comprend une première partie de chambre (22) et une seconde partie de chambre (23), au moins une partie de chambre (22) étant déplaçable par rapport à l'autre partie de chambre (23) entre une position écartée, pour permettre le chargement de la capsule (1) dans l'ensemble de distribution (21), et une position rapprochée pour permettre l'injection du fluide dans la capsule (1) et la distribution du produit alimentaire liquide,
dans lequel la première partie de chambre (22) et la seconde partie de chambre (23) ont des surfaces opposées en vis-à-vis (22a, 23a) pour maintenir entre elles la bride (7) de la capsule (1) et une partie annulaire correspondante de la feuille (5) dans la position rapprochée mentionnée ci-dessus, dans ladite position, la partie préhensible (5a ; 5b) de la feuille (5) étant complètement ou au moins partiellement maintenue entre les surfaces opposées (22a, 23a).

13. Procédé pour la préparation de produits alimentaires liquides comprenant les étapes suivantes :
a) prévoir une capsule (1) selon une ou plusieurs des revendications 1 à 11 ;
b) prévoir une machine pour préparer des produits liquides (20) ayant un ensemble de distribution (21) qui comprend une chambre d'infusion (22, 23) configurée pour recevoir ladite capsule (1) et pour distribuer le produit alimentaire liquide suite au contact entre un fluide d'alimentation, tel que de l'eau et/ou de la vapeur, et le contenu (2) de la capsule (1), la chambre d'infusion comprenant une première partie de chambre (22) et une seconde partie de chambre (23) dont au moins l'une est déplaçable par rapport à l'autre entre une position écartée pour permettre le chargement de la capsule (1) dans l'ensemble de distribution (21), et une position rapprochée pour permettre l'injection du fluide dans la capsule (1) et la distribution du produit alimentaire liquide ;
c) insérer la capsule (1) dans l'ensemble de distribution (21) avec les deux parties de chambre (22, 23) dans la position écartée mentionnée ci-dessus ;
d) actionner un mécanisme d'actionnement (24) de l'ensemble de distribution (21) pour amener les deux parties de chambre (22, 23) dans la position rapprochée mentionnée ci-dessus ;
e) injecter un fluide, tel que de l'eau et/ou de la vapeur, dans la capsule (1) pour préparer le produit alimentaire liquide et le distribuer ;
f) ramener les deux parties de chambre (22, 23) dans la position écartée mentionnée ci-dessus et provoquer l'extraction de la capsule (1) de l'ensemble de distribution (21),
dans lequel, dans la position rapprochée mentionnée ci-dessus, la bride (7) de la capsule (1) et une partie annulaire correspondante de la feuille (5) sont maintenues entre les surfaces opposées en vis-à-vis (22a, 23a) de la première partie de chambre (22) et de la seconde partie de chambre (23), dans ladite position, la partie préhensible (5a ; 5b) de la feuille (5) de la capsule (1) étant complètement ou au moins partiellement maintenue entre les surfaces opposées (22a, 23a),
et dans lequel, après l'étape f), au moins la feuille (5) de la capsule (1) est retirée en appliquant une force de tension sur la partie préhensible (5a ; 5b) ou bien sur la partie préhensible et une partie amovible correspondante de la bride (7).
